# EUROPEAN PATENT SPECIFICATION

(11) **EP 4 222 028 B1**
(45) Date of publication and mention of the grant of the patent: **30.10.2024**
(21) Application number: 21777408.2
(22) Date of filing: 13.09.2021
(51) Int. Cl.: B60T 7/02, B60T 7/12

(54) **BRAKE SYSTEM**
BREMSSYSTEM
SYSTÈME DE FREIN

(30) Priority: 22.09.2020 GB 202014974
(43) Date of publication of application: 09.08.2023
(73) Proprietor: Caterpillar SARL, 1208 Geneva (CH)
(72) Inventor: JOHNSON, Steven, Edward, Eastfield Peterborough PE1 5FQ (GB); ADEEB, Adam, J., Eastfield Peterborough PE1 5FQ (GB)
(74) Representative: Novagraaf Group
(86) International application number: PCT/EP2021/025343
(87) International publication number: WO 2022/063426

(56) References cited:
- EP-A1- 3 604 056
- EP-A1- 3 894 290
- WO-A1-2020/120738
- GB-A- 2 563 669
- GB-A- 2 580 641
- US-A- 5 887 954
- US-A1- 2014 110 995
- US-A1- 2014 346 854
- US-B2- 9 463 783

## Description

### TECHNICAL FIELD

This invention is directed towards a brake system and a method of operating a brake system. The brake system may be for a work machine, work vehicle, off road vehicle and/or the like.

### BACKGROUND

A typical braking system for a machine includes a hydraulic circuit with valves fluidly connected to service brakes, which, when actuated, decelerate the machine. A pedal may be manually actuated by an operator to control one or more valves to increase the fluid pressure supplied to the brakes such that the brakes are actuated. Alternatively, a control system may control one or more additional valves to implement an automatic braking mode such as auto retarding, anti-skid braking or dynamic brake control. A brake system implementing both operator and automatic braking may have relatively increased costs, increased space requirements and high complexity of design due to the need for multiple valves for the automatic braking mode and multiple hydraulic and electrical lines for those valves.

GB2563669 (A) discloses a hydraulic braking system comprising first and second brake valves acting upon first and second brake circuits. The first and second brake valves are arranged in a parallel configuration and are operable together by a foot pedal and individually by pilot pressure from respective, first and second control valves responsive to first and second control signals from an engine control unit.

### SUMMARY

The present invention provides a brake system comprising a control system, an operator input device and a plurality of brakes, and a brake valve assembly. The brake valve assembly comprising at least one channel including an operator brake valve controllable by the operator input device, an automatic brake valve controllable by the control system, and a control valve fluidly connected to at least one brake of the plurality of brakes and the operator and automatic brake valves. The control valve is configurable by the control system between an operator brake configuration for fluidly connecting the operator brake valve to the at least one brake and an automatic brake configuration for fluidly connecting the automatic brake valve to the at least one brake. The brake valve assembly is configurable in: an operator braking mode in which the control valve is in the operator brake configuration and the at least one brake is controllable by the operator brake valve in response to an input to the operator input device; and an automatic braking mode in which the control valve is in the automatic brake configuration and the at least one brake is controllable by the automatic brake valve in response to a control signal from the control system.

The present invention further provides a machine comprising such a brake system.

The present invention provides a method of operating a brake system, the brake system comprising a control system, an operator input device and a plurality of brakes, and a brake valve assembly comprising at least one channel. The at least one channel comprising an operator brake valve, an automatic brake valve and a control valve fluidly connected to at least one brake of the plurality of brakes and the operator and automatic brake valves. The method comprises determining, by the control system, whether to implement an operator braking mode or an automatic braking mode, and implementing the operator braking mode by: maintaining the control valve in an operator brake configuration to fluidly connect the operator brake valve to the at least one brake and receiving an input at the operator input device to control the operator brake valve and thereby control the at least one brake; or implementing the automatic braking mode by maintaining the control valve in an automatic brake configuration to fluidly connect the automatic brake valve to the at least one brake and automatically controlling, by the control system, the automatic brake valve and thereby control the at least one brake.

### BRIEF DESCRIPTION OF THE DRAWINGS

The present invention is described in conjunction with the appended figures. It is emphasized that, in accordance with the standard practice in the industry, various features are not drawn to scale. In fact, the dimensions of the various features may be arbitrarily increased or reduced for clarity of discussion.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
Figure 1 is a schematic illustration of a machine comprising a brake system of the present disclosure;
Figure 2 is a schematic illustration of a further machine comprising a brake system of the present invention; and
Figure 3 is a flowchart illustrating a method of operating a brake system in accordance with the present invention.

### DESCRIPTION

The ensuing description provides preferred exemplary embodiment(s) only, and is not intended to limit the scope, applicability or configuration of the invention. Rather, the ensuing description of the preferred exemplary embodiment(s) will provide those skilled in the art with an enabling description for implementing a preferred exemplary embodiment of the invention, it being understood that various changes may be made in the function and arrangement of elements, including combinations of features from different embodiments, without departing from the scope of the invention.

Specific details are given in the following description to provide a thorough understanding of the embodiments. However, it will be understood by one of ordinary skill in the art that embodiments may be practised without these specific details. For example, well-known circuits, processes, algorithms, structures, and techniques may be shown without unnecessary detail in order to avoid obscuring the embodiments.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

It is to be understood that the following disclosure provides many different embodiments, or examples, for implementing different features of various embodiments. Specific examples of components and arrangements are described below to simplify the present disclosure. These are, of course, merely examples and are not intended to be limiting. In addition, the present invention may repeat reference numerals and/or letters in the various examples. This repetition is for the purpose of simplicity and clarity and does not in itself dictate a relationship between the various embodiments and/or configurations discussed. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact.

The present invention is generally directed towards a brake system for a machine. The brake system comprises a brake valve assembly comprising at least one channel, each channel comprising an operator brake valve, an automatic valve and a control valve. In each channel the control valve is fluidly connected to the automatic valve and operator brake valve. The control valve is controlled by a control system between operator and automatic brake configurations, which fluidly connect the operator or automatic brake valve respectively to at least one brake. The brake valve assembly is configurable in operator and automatic braking modes by changing the configuration of the control valve between the operator and automatic brake configurations respectively.

In the operator braking mode the operator can manually control the at least one brake by providing an input to an operator input device, which controls the operator brake valve and thus pressurised fluid supply to the at least one brake. In the automatic braking mode the control system automatically controls the at least one brake by providing a control signal to the automatic brake valve, which controls the pressurised fluid supply to the at least one brake. The control valve in each channel may enable the automatic control of the at least one brake independently of the operator input. The automatic control can thus override the operator input and advanced braking features, such as anti-lock braking, can be implemented.

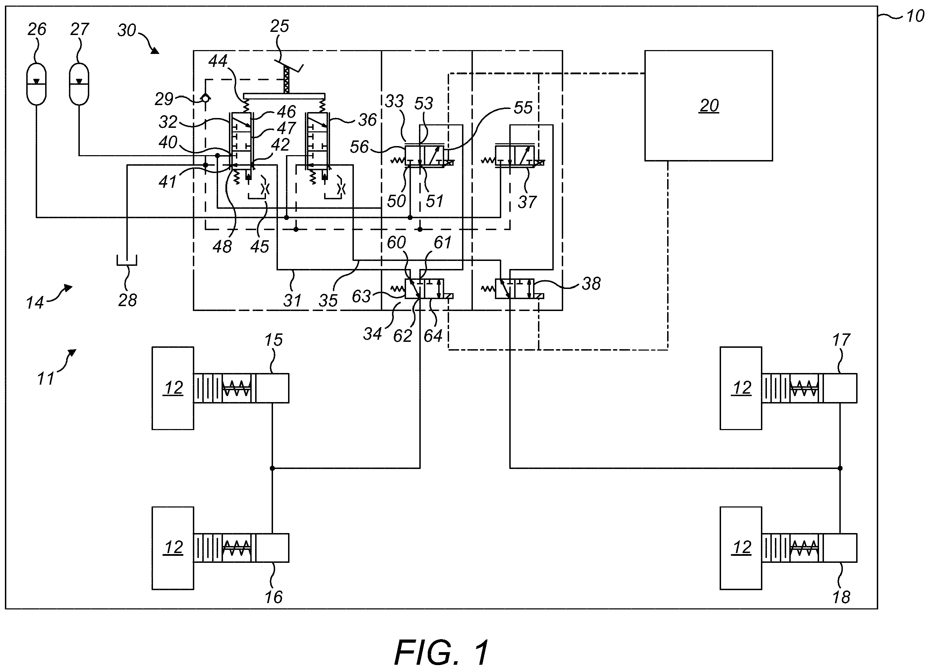

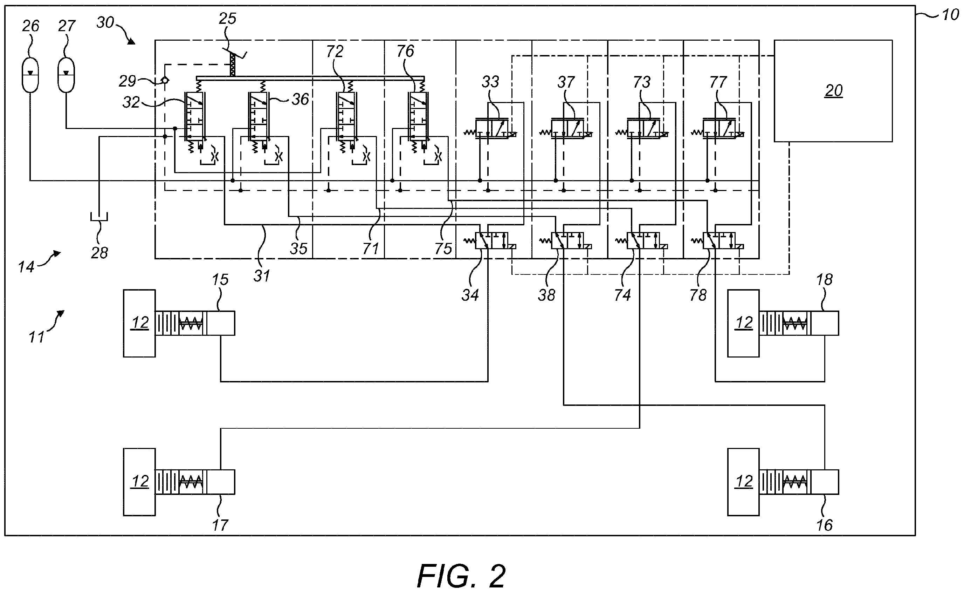

Figure 1 schematically illustrates a machine 10 comprising a brake system 11 in accordance with the present invention. Figure 2 schematically illustrates a further machine 10 and brake system 11 of the present invention. Figures 1 and 2 illustrate the same features with the same reference numerals.

The machine 10 may comprise wheels 12 driven by a power unit or engine (not illustrated) for enabling the machine 10 to travel over a terrain. The machine 10 may comprise tracks or the like driven by the wheels 12 and may be independently moveable across the terrain rather than on any rails or the like. The machine 10 may comprise a tractor unit attached to a trailer, which may comprise a tipping body. The tractor and trailer units may each comprise at least one pair of wheels 12. The machine 10 may therefore comprise an articulated hauler, wheel loader or motor grader. However, the machine 10 may be a work machine and may be a hauling machine, such as a dump truck, on-highway truck or off-highway truck, and/or an earth-moving or material handling machine, such as a backhoe, wheel tractor scraper, loader, dozer, shovel, drilling machine, motor grader, forestry machine or excavator.

The brake system 11 comprises a plurality of brakes 15, 16, 17, 18, a control system 20, an operator input device 25 and a brake valve assembly 30. The brake system 11 may comprise a fluid system 14 comprising the brake valve assembly 30 fluidly connected to the brakes 15, 16, 17, 18. The control system 20 and operator input device 25 are configured to selectively control the brake valve assembly 30 to control the application of the brakes 15, 16, 17, 18. In particular, the brake valve assembly 30 may control the transfer of pressurised hydraulic fluid to the at least one brake 15, 16, 17, 18 for selective actuation thereof.

In the present invention, the term "fluidly connected" means that components are connected by fluid lines (illustrated as lines in Figures 1 and 2) and ports such that fluid can be transferred between the components. The fluid may be hydraulic fluid, which may be substantially incompressible, and may be maintained under pressure by at least one fluid source 26, 27, such as at least one accumulator and/or hydraulic pump (discussed further below). In the present invention the brake valve assembly 30 is for distributing fluid pressure to the respective components of the brake system 11 and, as is known in the art, may not include a circulating flow of pressurised fluid. Terms relating to the control, flow, communication, transfer or the like of the fluid may instead refer to the control of the application of fluid pressure in which there may be little or no flow of the pressurised fluid, for example, by means of directional control valves.

The brakes 15, 16, 17, 18 may be configured to selectively apply a braking force to the wheels 12 to decelerate and/or control the angular velocity of the wheels 12. The brakes 15, 16, 17, 18 may be hydraulic brakes, friction brakes and/or service brakes. The brakes 15, 16, 17, 18 may comprise four brakes 15, 16, 17, 18, each associated with a wheel 12, as illustrated in Figures 1 and 2.

The operator input device 25 may be operably connected to and be for actuating the brake valve assembly 30. The operator input device 25 may be a manual input device and may require a manual input from an operator in order to actuate the brake valve assembly 30. The operator input device 25 may comprise a foot pedal, treadle and/or hand operated lever and may be operably connected to the brake valve assembly 30 by a mechanical connection as illustrated in Figure 1. Alternatively, the operator input device 25 may be operably connected to the brake valve assembly 30 by the control system 20 or another electrical system. The operator input device 25 may alternatively comprise a lever, a button, a touch screen or the like.

The brake valve assembly 30 comprises at least one channel 31, 35, 71, 75, each comprising an operator brake valve 32, 36, 72, 76, an automatic brake valve 33, 37, 73, 77 and a control valve 34, 38, 74, 78 fluidly connected to the operator and automatic brake valves 32, 36, 72, 76, 33, 37, 73, 77 of the same channel 31, 35, 71, 75. The at least one channel 31, 35, 71, 75, particularly the control valve 34, 38, 74, 78 thereof, controls and is in fluid communication with at least one of the brakes 15, 16, 17, 18.

Figure 1 illustrates a two channel brake system 11 in accordance with the present invention. The brake valve assembly 30 may comprise at least two channels 31, 35, 71, 75 and may comprise first and second channels 31, 35. The first channel 31 comprises a first operator brake valve 32, a first automatic brake valve 33 and a first control valve 34 fluidly connected to the first operator brake valve 32 and first automatic brake valve 33. The second channel 35 comprises a second operator brake valve 36, a second automatic brake valve 37 and a second control valve 38 fluidly connected to the second operator brake valve 36 and the second automatic brake valve 37.

Figure 2 illustrates a four channel brake system 11 in accordance with the present invention.

The brake system 11 of Figure 2 comprises first and second channels 31, 35 in a similar manner to the brake system 11 of Figure 1. In Figure 2 the brake valve assembly 30 further comprises a third channel 71 comprising a third operator brake valve 72, a third automatic brake valve 73 and a third control valve 74 fluidly connected to the third operator brake valve 72 and third automatic brake valve 73. In Figure 2 the brake valve assembly 30 further comprises a fourth channel 75 comprising a fourth operator brake valve 76, a fourth automatic brake valve 77 and a fourth control valve 78 fluidly connected to the fourth operator brake valve 76 and fourth automatic brake valve 77. Each channel 31, 35, 71, 75 controls and is fluidly connected to at least one of the plurality of brakes 15, 16, 17, 18. As in Figure 1, the or each channel 31, 35 may be fluidly connected to at least two brakes 15, 16, 17, 18. In particular, the first channel 31 and first control valve 34 may control and be in fluid communication with at least one, or two as illustrated, first brakes 15, 16. The second channel 35 and second control valve 38 may control and be in fluid communication with the at least one, or two as illustrated, second brakes 17, 18. Alternatively, as in Figure 2, each channel 31, 35, 71, 75 may be fluidly connected to one brake 15, 16, 17, 18. In particular, the first, second, third and fourth channels 31, 35, 71, 75 and respective first, second, third and fourth control valves 34, 38, 74, 78 may control and be in fluid communication with the respective the first, second, third and fourth brakes 15, 16, 17, 18. Although not illustrated, the brake system 11 may comprise channels 31, 35, 71, 75 in fluid communication with different numbers of brakes 15, 16, 17, 18. For example, one or more channels 31, 35, 71, 75 may be fluidly connected to one brake 15, 16, 17, 18 and one or more other channels 31, 35, 71, 75 may be fluidly connected to at least two brakes 15, 16, 17, 18.

The fluid system 14 may comprise at least one fluid source 26, 27 for supplying hydraulic fluid to the brake valve assembly 30 and/or at least one of the brakes 15, 16, 17, 18. The at least one fluid source 26, 27 may comprise separate, first and second tanks or accumulators 26, 27 as shown, each storing and supplying pressurised fluid to the rest of the fluid system 14. The at least one fluid source 26, 27 may be fluidly connected to, and supply pressurised fluid to, the operator brake valve(s) 32, 36, 72, 76 and automatic brake valve(s) 33, 37, 73, 77 as illustrated in Figures 1 and 2.

The fluid system 14 may comprise a fluid drain 28 for receiving hydraulic fluid from the brake valve assembly 30, for example from leak lines as illustrated. The fluid drain 28 may be fluidly connected to the at least one fluid source 26, 27, for example by a further hydraulic circuit (not illustrated), for recirculating fluid back through the brake valve assembly 30. The fluid drain 28 may be fluidly connected to, and receive fluid from, the operator brake valve(s) 32, 36, 72, 76 and automatic brake valve(s) 33, 37, 73, 77 as illustrated in Figures 1 and 2. The fluid drain 28 may also be fluidly connected to the operator brake valve(s) 32, 36, 72, 76 and/or operator input device 25 by a check valve 29 such that fluid exiting at the connection between the operator brake valve(s) 32, 36, 72, 76 and operator input device 25 can return to the fluid drain 28.

The following disclosure generally describes an operator brake valve 32, 36, 72, 76, an automatic brake valve 33, 37, 73, 77 and a control valve 34, 38, 74, 78 of one channel 31, 35, 71, 75. However, as discussed above, the brake system 11 may comprise at least two channels 31, 35, 71, 75 and each channel 31, 35, 71, 75 may include the same features and functionality. As a result, the following description may be read to describe the operator brake valve 32, 36, 72, 76, automatic brake valve 33, 37, 73, 77 and control valve 34, 38, 74, 78 of each channel 31, 35, 71, 75.

The operator brake valve 32, 36, 72, 76 is operably connected to and controllable by the operator input device 25. The operator brake valve 32, 36, 72, 76 may be in fluid communication with the at least one fluid source 26, 27, the fluid drain 28 and/or a control valve 34, 38, 74, 78 and may be configured to direct fluid therebetween.

The operator brake valve 32, 36, 72, 76 may comprise a pressure inlet 40 connected to the at least one fluid source 26, 27 for receiving fluid therefrom, a leak outlet 41 connected to the fluid drain 28 for supplying excess fluid thereto and/or a control port 42 for supplying pressurised fluid to the control valve 34, 38, 74, 78 of the same channel 31, 35, 71, 75. For the sake of clarity reference numerals indicating the features of only the first operator brake valve 32 are illustrated in Figure 1, although the other operator brake valve 36, 72, 76 may comprise the same features as illustrated.

The operator brake valve 32, 36, 72, 76 may be actuated by, and may be directly responsive to, an input by an operator of the machine 10 to the operator input device 25. As illustrated in Figure 1, the operator brake valve 32, 36, 72, 76 may be responsive to an input in the form of actuation of a foot pedal 25 by an operator of the machine 10. Actuation of the foot pedal 25 may compress springs 44, which may actuate the operator brake valve 32, 36, 72, 76. The operator brake valve 32, 36, 72, 76 may alternatively be responsive to an input or braking signal by other suitable mechanisms, such as a solenoid actuated by an engine control unit in response to an operator pressing a brake pedal.

The operator brake valve 32, 36, 72, 76 may be configurable or actuatable between a first operator brake valve position 46, a second operator brake valve position 47 and/or a third operator brake valve position 48, for example by actuation of a valve slide therein. The operator brake valve 32, 36, 72, 76 may comprise a 3-way 3-position valve. Alternatively, the operator brake valve 32, 36, 72, 76 may only be configurable in the first and third operator brake valve positions 46, 48 and the operator brake valve 32, 36, 72, 76 may comprise a 3-way 2-position valve.

The first operator brake valve position 46 may be for applying the at least one brake 15, 16, 17, 18 attached to the channel 31, 35, 71, 75 of the operator brake valve 32, 36, 72, 76. The operator brake valve 32, 36, 72, 76 may be configured in the first operator brake valve position 46 in response to an input to the operator input device 25 and when the at least one brake 15, 16, 17, 18 is in the process of being applied. In the first operator brake valve position 46 pressurised fluid may be communicated by the operator brake valve 32, 36, 72, 76 to the control valve 34, 38, 74, 78 of the same channel 31, 35, 71, 75, for example from the at least one fluid source 26, 27 as illustrated. In particular, the pressure inlet 40 may be fluidly connected to the control port 42 to allow pressurised fluid to communicate therethrough.

The second operator brake valve position 47 may also be for applying the at least one brake 15, 16, 17, 18 attached to the channel 31, 35, 71, 75 of the operator brake valve 32, 36, 72, 76. The operator brake valve 32, 36, 72, 76 may be configured into the second operator brake valve position 47 when the at least one brake 15, 16, 17, 18 is applied. The second operator brake valve position 47 may be configured to hold the at least one brake 15, 16, 17, 18 in an applied state. In the second operator brake valve position 47 fluid may not be communicated through the operator brake valve 32, 36, 72, 76, for example by the pressure inlet 40, leak outlet 41 and control port 42 of each operator brake valve 32, 36, 72, 76 being fluidly disconnected with one another.

The operator brake valve 32, 36, 72, 76 may be configured into the third operator brake valve positions 48 when no application of the at least one brake 15, 16, 17, 18 is demanded by the operator. In the third operator brake valve position 48 fluid may be communicated from the control valve 34, 38, 74, 78 to the fluid drain 28, for example by the control port 42 being in fluid communication with the leak outlet 41. The operator brake valve 32, 36, 72, 76 may be biased from the first operator brake valve position 46 towards the third operator brake valve position 48.

The operator brake valve 32, 36, 72, 76 may be a load-sensing valve, which may provide a smoother operator experience of the application of the brakes 15, 16, 17, 18. An orifice 45 may be provided at the control port 42 and may be provided internally to the operator brake valve 32, 36, 72, 76 to provide such load-sensing functionality.

If the brake valve assembly 30 comprises a plurality of channels 31, 35, 71, 75, the operator brake valves 32, 36, 72, 76 may be arranged in a parallel configuration as illustrated. The operator brake valves 32, 36, 72, 76 may control a plurality of the brakes 15, 16, 17, 18, optionally all of the brakes 15, 16, 17, 18 simultaneously and the brake valve assembly 30 may be configured such that the operator brake valves 32, 36, 72, 76 cannot control individual brakes 15,16, 17, 18 independently. An input to the operator input device 25 may actuate the operator brake valves 32, 36, 72, 76 simultaneously such that all operator brake valves 32, 36, 72, 76 move to the first and/or second operator brake valve position 46, 47 and pressurised fluid is supplied via the control valves 34, 38, 74, 78 to the brakes 15, 16, 17, 18.

The automatic brake valve 33, 37, 73, 77 is operably connected to and controllable by the control system 20. The automatic brake valve 33, 37, 73, 77 is in fluid communication with the at least one fluid source 26, 27, the fluid drain 28 and/or control valve 34, 38, 74, 78 of the same channel 31, 35, 71, 75 and may be configured to direct fluid therebetween.

The automatic brake valve 33, 37, 73, 77 may comprise a pressure inlet 50 connected to the at least one fluid source 26, 27 for receiving fluid therefrom, a leak outlet 51 connected to the fluid drain 28 for supplying excess fluid thereto and/or a control port 53 for supplying pressurised fluid to the control valve 34, 38, 74, 78 of the same channel 31, 35, 71, 75. For the sake of clarity, reference numerals indicating the features of only the first automatic brake valve 33 are illustrated in Figure 1, although the other automatic brake valves 37, 73, 77 may comprise the same features as illustrated.

The automatic brake valve 33, 37, 73, 77 is actuated by, and is directly responsive to, a control or braking signal from the control system 20. If the brake valve assembly 30 comprises a plurality of channels 31, 35, 71, 75, the automatic brake valve 33, 37, 73, 77 of each channel 31, 35, 71, 75 may be independently controllable such that each channel 31, 35, 71, 75 can independently control the at least one brake 15, 16, 17, 18 they are fluidly connected to.

The automatic brake valve 33, 37, 73, 77 may be configurable or actuatable between a variable control configuration 55 and an off configuration 56, for example by actuation of a valve slide therein. The automatic brake valve 33, 37, 73, 77 may comprise an adjustable, solenoid, proportional and/or 3-way 2-position valve. The automatic brake valve 33, 37, 73, 77 may be biased towards the off configuration 56.

The variable control configuration 55 may be for applying the at least one brake 15, 16, 17, 18 and the automatic brake valve 33, 37, 73, 77 may be configured in the variable control configuration 55 in response to an electrical braking signal from the control system 20. In the variable control configuration 55, pressurised fluid may be communicated by the automatic brake valve 33, 37, 73, 77 to the control valve 34, 38, 74, 78 of the same channel 31, 35, 71, 75, for example from the at least one fluid source 26, 27 as illustrated. In particular, the pressure inlet 50 may be fluidly connected to the control port 53 to allow pressurised fluid to communicate therethrough.

The automatic brake valve 33, 37, 73, 77 may be configured into the off configuration 56 when no application of the at least one brake 15, 16, 17, 18 is demanded by the control system 20. In the off configuration 56 fluid may be communicated from the or each control valve 34, 38, 74, 78 to the fluid drain 28, for example by the control port 53 being in fluid communication with the leak outlet 51, as illustrated. Alternatively, in the off configuration 56 the automatic brake valve 33, 37, 73, 77 may not communicate fluid therethrough.

The control valve 34, 38, 74, 78 is operably connected to and controllable by the control system 20. The control valve 34, 38, 74, 78 is fluidly connected to the at least one brake 15, 16, 17, 18, the operator brake valve 32, 36, 72, 76 and the automatic brake valve 33 of the same channel 31, 35, 71, 75. The control valve 34, 38, 74, 78 is configured to control whether the automatic brake valve 33, 37, 73, 77 or the operator brake valve 32, 36, 72, 76 of the same channel 31, 35, 71, 75 is fluidly connected with at least one brake 15, 16, 17, 18 associated with the channel 31, 35, 71, 75. The control valve 34, 38, 74, 78 may be actuated by, and may be directly responsive to, a control signal from the control system 20.

The control valve 34, 38, 74, 78 may comprise a first control valve port 60 fluidly connected to the respective operator brake valve 32, 36, 72, 76 of the same channel 31, 35, 71, 75, a second control valve port 61 fluidly connected to the automatic brake valve 33, 37, 73, 77 of the same channel 31, 35, 71, 75 and a third control valve port 62 fluidly connected to at least one brake 15, 16, 17, 18. For the sake of clarity, reference numerals indicating the features of only the first control valve 34 are illustrated in Figure 1, although the other control valves 38, 74, 78 may comprise the same features as illustrated.

The control valve 34, 38, 74, 78 is controllable by the control system 20 between an operator brake configuration 63 and an automatic brake configuration 64, for example by actuation of a valve slide therein. The control valve 34, 38, 74, 78 may comprise may comprise an adjustable, solenoid, proportional, on-off and/or 3-way 2-position valve. The control valve 34, 38, 74, 78 may be biased towards the operator brake configuration 63. The control valve 34, 38, 74, 78 may only be configurable in the operator and automatic brake configurations 63, 64 and in no other configurations.

In the operator brake configuration 63, the operator brake valve 32, 36, 72, 76 is fluidly connected with the at least one brake 15, 16, 17, 18 via the control valve 34, 38, 74, 78 of the same channel 31, 35, 71, 75. Thus the at least one brake 15, 16, 17, 18 is controllable by the operator brake valve 32, 36, 72, 76 in response to an input to the operator input device 25. The first control valve port 60 may be fluidly connected to the third control valve port 62.

In the automatic brake configuration 64, the automatic brake valve 33, 37, 73, 77 is fluidly connected with the at least one brake 15, 16, 17, 18 via the control valve 34, 38, 74, 78 of the same channel 31, 35, 71, 75. The at least one brake 15, 16, 17, 18 is controllable by the automatic brake valve 33, 37, 73, 77 in response to a control signal from the control system 20. The second control valve port 61 may be fluidly connected to the third control valve port 62.

The control system 20 is configured to control the control and automatic brake valves 34, 38, 74, 78, 33, 37, 73, 77 in order to control the brakes 15, 16, 17, 18. The control system 20 may comprise a controller communicatively connected (via a wired or wireless connection) to the control and automatic brake valves 34, 38, 74, 78, 33, 37, 73, 77. The controller may be of any suitable known type and the control system 20 may be an engine control unit (ECU), part of an ECU or independent of an ECU. The controller may comprise a storage medium, which may store instructions or algorithms in the form of data, and a processing unit, which may be configured to perform operations based upon the instructions. The storage medium may comprise any suitable computer-accessible or non-transitory storage medium for storing computer program instructions, such as RAM, SDRAM, DDR SDRAM, RDRAM, SRAM, ROM, magnetic media, optical media and the like. The processing unit may comprise any suitable processor capable of executing memory-stored instructions, such as a microprocessor, uniprocessor, a multiprocessor and the like. The controller may further comprise a graphics processing unit for rendering objects for viewing on a display.

The control system 20 may comprise at least one input and at least one sensor communicatively connected (via a wired or wireless connection) to the controller. The at least one input may comprise a user interface, switch, touch screen, button or the like. The at least one sensor may comprise a wheel speed sensor, a position sensor associated with the operator input device 25 and/or an engine speed sensor and may be for sensing a machine speed, actuation of the operator input device 25, a machine engine speed and/or other operational parameters. The controller may be configured to receive data from the at least one input and/or at least one sensor and perform operations based upon instructions stored in the storage medium. The controller may generate and send signals, such as the control and/or braking signals, to the control and/or automatic brake valves 34, 38, 74, 78, 33, 37, 73, 77.

The control system 20 may automatically control the control and/or automatic brake valves 34, 38, 74, 78, 33, 37, 73, 77, by sending control signals thereto, in accordance with at least one advanced braking routine. Each advanced braking routine may be stored as instructions on the controller storage medium. The advanced braking routine may comprise auto retarding, electronic brake application, an anti-lock braking system (ABS) or anti-skid braking, dynamic stability control (DSC) or the like. Each advanced braking routine may at least partially controllable by an input from the operator to the at least one input (for example an input by an operator turning ABS on or off), but once implemented by the control system 20 the advanced braking routine may control the control and automatic brake valves 34, 38, 74, 78, 33, 37, 73, 77 independently of the operator.

The brake system 11, and particularly the or each at least one channel 31, 35, 71, 75, is configurable in an operator braking mode 81 in which the control valve 34, 38, 74, 78 is in the operator brake configuration 63 and the at least one brake 15, 16, 17, 18 is controllable by the operator brake valve 32, 36, 72, 76 in response to an input to the operator input device 25. The brake system 11 is also configurable an automatic braking mode 82 in which the control valve 34, 38, 74, 78 is in the automatic brake configuration 64 and the at least one brake 15, 16, 17, 18 is controllable by the automatic brake valve 33, 37, 73, 77 in response to a control signal from the control system 20. To swap between the operator and automatic braking modes 81, 82, the control system 20 actuates the control valve 34, 38, 74, 78 between the operator brake configuration 63 and the automatic brake configuration 64 respectively.

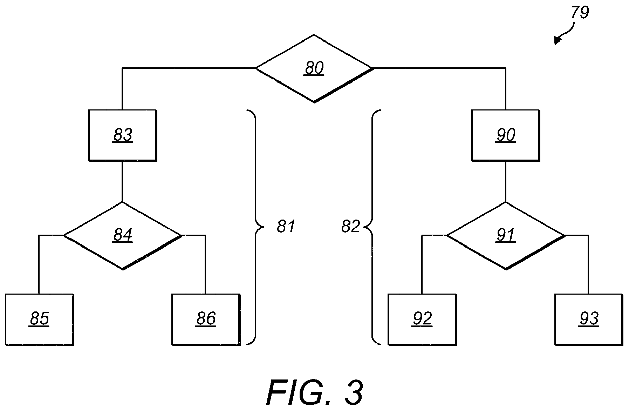

An exemplary method 79 of operating the brake system 11 in accordance with the present invention is illustrated in Figure 3. The following description of the method 79 is in reference to the implementation of the operator and automatic braking modes 81, 82 in one channel 31, 35, 71, 75.

In a determination step 80, it is determined, for example at the control system 20, whether to implement an operator braking mode 81 or an automatic braking mode 82. The control system 20 may implement the automatic braking mode 82 if it determines that at least one advanced braking routine is required. The control system 20 may determine that an advanced braking routine is required based upon data received from the at least one input and/or at least one sensor. For example, the control system 20 may receive data from a wheel speed sensor showing that one or more wheels 12 have locked and thereby determine that anti-skid braking is required. The operator braking mode 81 may be implemented if the control system 20 does not determine that an advanced braking routine is required.

In the operator braking mode 81 the operator may selectively actuate the at least one brake 15, 16, 17, 18 for slowing the wheels 12 and machine 10. At step 83, the operator braking mode 81 is implemented by maintaining the control valve 34, 38, 74, 78 in the operator brake configuration 63 to fluidly connect the operator brake valve 32, 36, 72, 76 to the at least one brake 15, 16, 17, 18. For example, the control valve 34, 38, 74, 78 may be biased to the operator brake configuration 63. The operator braking mode 81 may be implemented unless the control system 20 actuates the control valve 34, 38, 74, 78.

At step 84 the operator provides an input to the operator input device 25, such as by pressing on the foot pedal 25. At step 85 the operator input device 25 controls the operator brake valve 32, 36, 72, 76 to actuate or control the at least one brake 15, 16, 17, 18, such as by controlling the flow of pressurised fluid thereto. The operator input device 25 may actuate the operator brake valve 32, 36, 72, 76 by virtue of the operable connection therebetween and the operator brake valve 32, 36, 72, 76 may move to the first operator brake valve position 46. As a result, pressurised fluid may be transferred from the at least one fluid source 26, 27 and may be transferred to the control valve 34, 38 and onto the at least one brake 15, 16, 17, 18. Thus the at least one brake 15, 16, 17, 18 may be applied. The pressure in first operator brake valve position 46 may vary in accordance with the input to the operator input device 25 (e.g. the travel of the foot pedal 25), thereby controlling the fluid pressure at the at least one brake 15, 16, 17, 18 such that applied braking force can also be varied. The operator input device 25 may actuate the operator brake valve 32, 36, 72, 76 by virtue of the operable connection therebetween and the operator brake valve 32, 36, 72, 76 may move from the first operator brake valve position 46 to the second operator brake valve position 47 such that the at least one brake 15, 16, 17, 18 may be held in an applied state.

If the operator does not provide an input to the operator input device 25 at step 84, then at step 86 the at least one brake 15, 16, 17, 18 may not be actuated. The operator brake valve 32, 36, 72, 76 may be configured, such as by being biased, into the third operator brake valve position 48. Pressurised fluid may not be transferred to the at least one brake 15, 16, 17, 18 from the operator brake valve 32, 36, 72, 76 such that the at least one brake 15, 16, 17, 18 is not actuated. Instead, in the third operator brake valve position 48, fluid may return to the fluid drain 28 such that the at least one brake 15, 16, 17, 18 is not applied.

In the automatic braking mode 82 the control system 20 may selectively actuate the at least one brake 15, 16, 17, 18 for slowing the wheels 12 and machine 10. At step 90, the automatic braking mode 82 is implemented by maintaining the control valve 34, 38, 74, 78 in the automatic brake configuration 64 to fluidly connect the automatic brake valve 33, 37, 73, 77 to the at least one brake 15, 16, 17, 18. The control system 20 may actuate the control valve 34, 38, 74, 78 into the automatic brake configuration 64.

At step 91, the control system 20 may determine whether to control the automatic brake valve 33, 37, 73, 77 to actuate the at least one brake 15, 16, 17, 18, for example based upon at least one advanced braking routine. At step 92, the control system 20 automatically controls the automatic brake valve 33, 37, 73, 77. The control system 20 may actuate the automatic brake valve 33, 37, 73, 77 into the variable control configuration 55. As a result, pressurised fluid may be transferred from the at least one fluid source 26, 27 and may be transferred to the control valve 34, 38, 74, 78 and onto the at least one brake 15, 16, 17, 18. Thus the at least one brake 15, 16, 17, 18 may be applied.

The control system 20 may adjust the automatic brake valve 33, 37, 73, 77 in accordance with an advanced braking routine. The control system 20 may adjust the automatic brake valve 33, 37, 73, 77 in the variable control configuration 55 to vary the fluid pressure and thereby vary the braking force applied by the brakes 15, 16, 17, 18.

If at step 91 the control system 20 determines to not actuate the at least one brake 15, 16, 17, 18, then at step 93 the control system 20 may actuate the automatic brake valve 33, 37, 73, 77 into the off configuration 56, or allow the automatic brake valve 33, 37, 73, 77 to be biased into the off configuration 56, such that fluid may return to the fluid drain 28 and the at least one brake 15, 16, 17, 18 is not applied.

The control system 20 may implement the automatic braking mode 82 whilst the brake system 11 is in the operator braking mode 81 and an input is being received from the operator at the operator input device 25. Therefore, the control system 20 may be configured to override the operator input and control the at least one brake 15, 16, 17, 18 independently of the operator and in accordance with an advanced braking routine.

The method 79 described above with reference to Figure 3 may be implemented in a plurality of channels 31, 35, 71, 75. In the determination step 80, it may determined, for example at the control system 20, whether to implement an operator braking mode 81 or an automatic braking mode 82 in one or more of the channels 31, 35, 71, 75. Subsequently, the operator or automatic braking modes 81, 82 may be implemented in all of the channels 31, 35, 71, 75.

When a plurality of channels 31, 35, 71, 75 are operated in the automatic braking mode 82, the control system 20 may control (for example adjust the fluid pressure through or prevent fluid pressure through) the automatic brake valves 33, 37, 73, 77 independently of each other. Therefore, the control system 20 may be operable to control the brakes 15, 16, 17, 18 independently of one another. As a result, when a plurality of channels 31, 35, 71, 75 are operated in the automatic braking mode 82, different advanced braking routines may be implemented for different brakes 15, 16, 17, 18.

Alternatively, in the determination step 80 the control system 20 may determine that least one wheel 12 needs to be controlled by the operator and least one other wheel 12 by the control system 20. The control system 20 may control the control valves 34, 38, 74, 78 independently of one another. The operator braking mode 81 may be implemented in one or more channels 31, 35, 71, 75 and the automatic braking mode 82 may be implemented in one or more other channels 31, 35, 71, 75. The operator may thus still have some control of the brakes 15, 16, 17, 18 and the control system 20 may be able to implement an advanced braking routine in respect of only one or some of the brakes 15, 16, 17, 18. For example, if only one wheel 12 skids, anti-skid braking can be implemented only in respect of the associated brake 15, 16, 17, 18.

In a particular unclaimed aspect of the present disclosure, the advanced braking routine may be an anti-skid braking routine and method 79 may be implemented as follows. The plurality of channels 31, 35, 71, 75 may be operated in the operator braking mode 81. At determination step 80, the control system 20 may determine that at least one wheel 12 associated with at least one brake 15, 16, 17, 18 has locked and the machine 10 may be skidding, for example based upon data deceived from a wheel speed sensor attached to the at least one wheel 12.

At step 90, the control system 20 may subsequently implement the automatic braking mode 82, overriding the operator braking mode 81, for all channels 31, 35, 71, 75 or for at least the channel 31, 35, 71, 75 fluidly connected to the at least one brake 15, 16, 17, 18 associated with the at least one locked wheel 12. The control system 20 may implement the automatic braking mode 82 by actuating the control valve(s) 34, 38, 74, 78 to the automatic brake configuration 64.

At step 91, the control system 20 may determine that an advanced braking routine, particularly an anti-skid braking routine, should be implemented in all channels 31, 35, 71, 75 or in at least the channel 31, 35, 71, 75 fluidly connected to the at least one brake 15, 16, 17, 18 associated with the at least one locked wheel 12. As a result, at step 92 the control system 20 automatically controls the relevant automatic brake valve(s) 33, 37, 73, 77 in accordance with the anti-skid braking routine. For example, the control system 20 may control the automatic brake valve(s) 33, 37, 73, 77 in the variable control configuration 55 and may control the fluid pressure supplied to, to control the braking force applied by, the at least one brake 15, 16, 17, 18 associated with the at least one locked wheel 12 such that the wheel 12 is unlocked and able to rotate. The control system 20 may control the automatic brake valve 33, 37, 73, 77 in the variable control configuration 55 and control the braking force applied by, the at least one brake 15, 16, 17, 18 until the machine 10 comes to a halt.

### INDUSTRIAL APPLICABILITY

The brake system 11 may be applicable to machines 10 where braking is required to be controlled manually and directly by the operator and also automatically and independently of the operator. The brake system 11 may reduce the number of valves required, and may thereby reduce manufacturing costs and may increase reliability due to requiring fewer components.

In particular, the same control valve 34, 38, 74, 78 may be used to implement either the advanced braking routine or direct manual control by an operator. This may result in a significant cost reduction and much better machine integration.

The implementation of the control valve 34, 38, 74, 78 may allow advanced braking features such as an anti-lock braking routine to be used. For an anti-lock braking routine, the input from the operator through the operator brake valve 32, 36, 72, 76 may need to be blocked and the control valve 34, 38, 74, 78 may allow this. In prior art designs, advanced braking features such as an anti-lock braking routine may not be implementable because the operator input may not be overridable.

The brake system 11 may also be modular in design by virtue of the ability to add or remove further channels 31, 35, 71, 75 from the brake valve assembly 30. Therefore, the brake system 11 may be effectively designed for and implemented in a wide variety of machines 10.

By having multiple channels 31, 35, 71, 75 with separate control, operator and automatic brake valves 34, 38, 74, 78, 32, 36, 72, 76, 33, 37, 73, 77, the redundancy of the brake system 11 may be significantly increased. In particular, should failure in one channel 31, 35, 71, 75 occur then it will not affect the braking ability of the other channel(s) 31, 35, 71, 75.

By having multiple channels 31, 35, 71, 75 with separate control, operator and automatic brake valves 34, 38, 74, 78, 32, 36, 72, 76, 33, 37, 73, 77, the complexity of the advanced braking routines can be increased. In particular, different operator and/or automatic braking modes 81, 82 may be implemented in each of the channels 31, 35, 71, 75.

## Claims

1. A brake system (11) comprising:
a control system (20), an operator input device (25) and a plurality of brakes (15, 16, 17, 18); and
a brake valve assembly (30) comprising at least one channel (31, 35, 71, 75) comprising:
an operator brake valve (32, 36, 72, 76) controllable by the operator input device; and
an automatic brake valve (33, 37, 71, 75) controllable by the control system (20);
**characterised by** a control valve (34, 38, 74, 78) fluidly connected to at least one brake of the plurality of brakes (15, 16, 17, 18) and the operator and automatic brake valves (32, 36, 72, 76, 33, 37, 71, 75), wherein the control valve (34, 38, 74, 78) is configurable by the control system (20) between an operator brake configuration for fluidly connecting the operator brake valve (32, 36, 72, 76) to the at least one brake (15, 16, 17, 18) and an automatic brake configuration for fluidly connecting the automatic brake valve (33, 37, 71, 75) to the at least one brake (15, 16, 17, 18);
wherein the brake valve assembly (30) is configurable in:
an operator braking mode in which the control valve (34, 38, 74, 78) is in the operator brake configuration and the at least one brake (15, 16, 17, 18) is controllable by the operator brake valve (32, 36, 72, 76) in response to an input to the operator input device (25); and
an automatic braking mode in which the control valve (34, 38, 74, 78) is in the automatic brake configuration and the at least one brake (15, 16, 17, 18) is controllable by the automatic brake valve (33, 37, 71, 75) in response to a control signal from the control system (20).

2. A brake system (11) as claimed in claim 1 wherein the control system (20) is configured to implement the automatic braking mode and control the automatic brake valve (33, 37, 71, 75) in accordance with at least one advanced braking routine.

3. A brake system (11) as claimed in claim 1 or claim 2 wherein the brake valve assembly (30) comprises a plurality of channels (31, 35, 71, 75) and the control system (20) is configured to control the plurality of channels (31, 35, 71, 75), particularly the control valves (34, 38, 74, 78) and/or automatic brake valves (33, 37, 71, 75) thereof, independently of one another.

4. A brake system (11) as claimed in claims 2 and 3 wherein the control system (20) is configured to, independently for each channel (31, 35, 71, 75), implement the automatic braking mode and control the automatic brake valve (33, 37, 71, 75) in accordance with at least one advanced braking routine.

5. A brake system (11) as claimed in any one of claims 2 to 4 wherein the at least one advanced braking routine comprises at least one of auto retarding, electronic brake application, anti-skid braking and dynamic stability control.

6. A brake system (11) as claimed in any one of the preceding claims wherein the control valve (34, 38, 74, 78) is biased towards the operator brake configuration and/or the control system (20) is configured to implement the automatic braking mode by actuating the control valve (34, 38, 74, 78) into the automatic brake configuration.

7. A brake system (11) as claimed in any one of the preceding claims wherein the brake valve assembly (30) comprises a plurality of channels (31, 35, 71, 75) and the operator brake valves (32, 36, 72, 76) of the plurality of channels (31, 35, 71, 75) are controllable simultaneously by the operator input device (25).

8. A brake system (11) as claimed in any one of the preceding claims wherein the operator brake valve (32, 36, 72, 76) is fluidly connected to at least one fluid source (26, 27) and is configurable in a first operator brake valve position to communicate pressurised fluid from the at least one fluid source (26, 27) to the control valve (34, 38, 74, 78).

9. A brake system (11) as claimed in claim 8 wherein the operator brake valve (32, 36, 72, 76) is configurable in a second and/or third operator brake valve position, wherein in the second operator brake valve position the operator brake valve (32, 36, 72, 76) is configured to not communicate fluid therethrough and/or in the third operator brake valve position the operator brake valve (32, 36, 72, 76) is configured to communicate fluid from the control valve (34, 38, 74, 78) to a fluid drain (28).

10. A brake system (11) as claimed in any one of the preceding claims wherein the automatic brake valve (33, 37, 71, 75) is fluidly connected to at least one fluid source (26, 27) and is configurable in a variable control configuration to communicate pressurised fluid from the at least one fluid source (26, 27) to the control valve (34, 38, 74, 78).

11. A brake system (11) as claimed in claim 10 wherein the automatic brake valve (33, 37, 71, 75) is configurable in an off configuration to communicate fluid from the control valve (34, 38, 74, 78) to a fluid drain (28) or to not communicate fluid therethrough.

12. A brake system (11) as claimed in any one of the preceding claims wherein the at least one channel (31, 35, 71, 75) comprises first and second channels (31, 35),
wherein the first channel (31) comprises:
a first operator brake valve (32) controllable by the operator input device (25);
a first automatic brake valve (33) controllable by the control system (20); and
a first control valve (35) fluidly connected to at least one first brake (15) of the plurality of brakes (15, 16, 17, 18) and the first operator and automatic brake valves (32, 33), wherein the first control valve (35) is configurable by the control system (20) between the operator brake configuration for fluidly connecting the first operator brake valve (32) to the at least one first brake (15) and the automatic brake configuration for fluidly connecting the first automatic brake valve (33) to the at least one first brake (15),
wherein the second channel (35) comprises:
a second operator brake valve (36) controllable by the operator input device (25);
a second automatic brake valve (37) controllable by the control system (20); and
a second control valve (38) fluidly connected to at least one second brake (16) of the plurality of brakes (15, 16, 17, 18) and the second operator and automatic brake valves (36, 37), wherein the second control valve (38) is configurable by the control system (20) between the operator brake configuration for fluidly connecting the second operator brake valve (36) to the at least one second brake (16) and the automatic brake configuration for fluidly connecting the second automatic brake valve (37) to the at least one second brake (16),
wherein the brake valve assembly (30) is configurable in:
an operator braking mode in which the first and/or second control valve (34, 38) is in the operator brake configuration and the at least one first and/or second brake (15, 16) is controllable by the first and/or second operator brake valve (32, 36) in response to an input to the operator input device (25); and
an automatic braking mode in which the first and/or second control valve (34, 38) is in the automatic brake configuration and the at least one first and/or second brake (15, 16) is controllable by the first and/or second automatic brake valve (33, 37) in response to a control signal from the control system (20).

13. A machine comprising the brake system (11) of any one of the preceding claims.

14. A method of operating a brake system (11), the brake system (11) comprising:
a control system (20), an operator input device (25) and a plurality of brakes (15, 16, 17, 18); and
a brake valve assembly (30) comprising at least one channel (31, 35, 71, 75) comprising an operator brake valve (32, 36, 72, 76), an automatic brake valve (33, 37, 71, 75) and a control valve (34, 38, 74, 78) fluidly connected to at least one brake of the plurality of brakes (15, 16, 17, 18) and the operator and automatic brake valves (32, 36, 72, 76, 33, 37, 71, 75),
the method comprising:
determining, by the control system (20), whether to implement an operator braking mode or an automatic braking mode; and
implementing the operator braking mode by:
maintaining the control valve (34, 38, 74, 78) in an operator brake configuration to fluidly connect the operator brake valve (32, 36, 72, 76) to the at least one brake (15, 16, 17, 18); and
receiving an input at the operator input device (25) to control the operator brake valve (32, 36, 72, 76) and thereby control the at least one brake (15, 16, 17, 18); or
implementing the automatic braking mode by:
maintaining the control valve (34, 38, 74, 78) in an automatic brake configuration to fluidly connect the automatic brake valve (33, 37, 71, 75) to the at least one brake (15, 16, 17, 18); and
automatically controlling, by the control system (20), the automatic brake valve (33, 37, 71, 75) and thereby control the at least one brake (15, 16, 17, 18).

15. A method as claimed in claim 14 wherein the method comprises implementing the automatic braking mode during the operator braking mode and whilst the input is being received at the operator input device (25).

## Patentansprüche

1. Bremssystem (11), umfassend:
ein Steuersystem (20), eine Bedienereingabevorrichtung (25) und eine Vielzahl von Bremsen (15, 16, 17, 18); und
eine Bremsventilanordnung (30), umfassend mindestens einen Kanal (31, 35, 71, 75), umfassend:
ein Bedienerbremsventil (32, 36, 72, 76), das durch die Bedienereingabevorrichtung steuerbar ist; und
ein Automatikbremsventil (33, 37, 71, 75), das durch das Steuersystem (20) steuerbar ist;
**gekennzeichnet durch** ein Steuerventil (34, 38, 74, 78), das mit mindestens einer Bremse der Vielzahl von Bremsen (15, 16, 17, 18) und den Bediener- und Automatikbremsventilen (32, 36, 72, 76, 33, 37, 71, 75) fluidisch verbunden ist, wobei das Steuerventil (34, 38, 74, 78) durch das Steuersystem (20) zwischen einer Bedienerbremskonfiguration zum fluidischen Verbinden des Bedienerbremsventils (32, 36, 72, 76) mit der mindestens einen Bremse (15, 16, 17, 18) und einer Automatikbremskonfiguration zum fluidischen Verbinden des Automatikbremsventils (33, 37, 71, 75) mit der mindestens einen Bremse (15, 16, 17, 18) konfigurierbar ist;
wobei die Bremsventilanordnung (30) konfigurierbar ist in:
einen Bedienerbremsmodus, in dem das Steuerventil (34, 38, 74, 78) in der Bedienerbremskonfiguration ist und die mindestens eine Bremse (15, 16, 17, 18) durch das Bedienerbremsventil (32, 36, 72, 76) als Reaktion auf eine Eingabe in die Bedienereingabevorrichtung (25) steuerbar ist; und
einen Automatikbremsmodus, in dem das Steuerventil (34, 38, 74, 78) in der Automatikbremskonfiguration ist und die mindestens eine Bremse (15, 16, 17, 18) durch das Automatikbremsventil (33, 37, 71, 75) als Reaktion auf ein Steuersignal von dem Steuersystem (20) steuerbar ist.

2. Bremssystem (11) nach Anspruch 1, wobei das Steuersystem (20) konfiguriert ist, um den Automatikbremsmodus anzuwenden und das Automatikbremsventil (33, 37, 71, 75) gemäß mindestens einer erweiterten Bremsroutine zu steuern.

3. Bremssystem (11) nach Anspruch 1 oder Anspruch 2, wobei die Bremsventilanordnung (30) eine Vielzahl von Kanälen (31, 35, 71, 75) umfasst, und das Steuersystem (20) konfiguriert ist, um die Vielzahl der Kanäle (31, 35, 71, 75), insbesondere die Steuerventile (34, 38, 74, 78) und/oder die Automatikbremsventile (33, 37, 71, 75) davon, unabhängig voneinander zu steuern.

4. Bremssystem (11) nach Anspruch 2 und 3, wobei das Steuersystem (20) konfiguriert ist, um, unabhängig für jeden Kanal (31, 35, 71, 75), den Automatikbremsmodus anzuwenden und das Automatikbremsventil (33, 37, 71, 75) gemäß mindestens einer erweiterten Bremsroutine zu steuern.

5. Bremssystem (11) nach einem der Ansprüche 2 bis 4, wobei die mindestens eine erweiterte Bremsroutine mindestens eines von einer Auto-Verzögerung, einer elektronische Bremsbetätigung, einer Antiblockierbremsung und einer dynamische Stabilitätskontrolle umfasst.

6. Bremssystem (11) nach einem der vorstehenden Ansprüche, wobei das Steuerventil (34, 38, 74, 78) zu der Bedienerbremskonfiguration hin vorgespannt ist und/oder das Steuersystem (20) konfiguriert ist, um den Automatikbremsmodus durch Betätigen des Steuerventils (34, 38, 74, 78) in die Automatikbremskonfiguration anzuwenden.

7. Bremssystem (11) nach einem der vorstehenden Ansprüche, wobei die Bremsventilanordnung (30) eine Vielzahl von Kanälen (31, 35, 71, 75) umfasst, und die Bedienerbremsventile (32, 36, 72, 76) der Vielzahl von Kanälen (31, 35, 71, 75) durch die Bedienereingabevorrichtung (25) gleichzeitig steuerbar sind.

8. Bremssystem (11) nach einem der vorstehenden Ansprüche, wobei das Bedienerbremsventil (32, 36, 72, 76) mit mindestens einer Fluidquelle (26, 27) fluidisch verbunden ist, und in einer ersten Bedienerbremsventilposition konfigurierbar ist, um druckbeaufschlagtes Fluid von der mindestens einen Fluidquelle (26, 27) an das Steuerventil (34, 38, 74, 78) zu übertragen.

9. Bremssystem (11) nach Anspruch 8, wobei das Bedienerbremsventil (32, 36, 72, 76) in eine zweite und/oder dritte Bedienerbremsventilposition konfigurierbar ist, wobei das Bedienerbremsventil (32, 36, 72, 76) in der zweiten Bedienerbremsventilposition konfiguriert ist, um keine Fluid dort hindurch zu übertragen, und/oder wobei das Bedienerbremsventil (32, 36, 72, 76) in der dritten Bedienerbremsventilposition konfiguriert ist, um Fluid von dem Steuerventil (34, 38, 74, 78) zu einem Fluidablass (28) zu übertragen.

10. Bremssystem (11) nach einem der vorstehenden Ansprüche, wobei das Automatikbremsventil (33, 37, 71, 75) mit mindestens einer Fluidquelle (26, 27) fluidisch verbunden ist, und in einer variablen Steuerkonfiguration konfigurierbar ist, um druckbeaufschlagtes Fluid von der mindestens einen Fluidquelle (26, 27) an das Steuerventil (34, 38, 74, 78) zu übertragen.

11. Bremssystem (11) nach Anspruch 10, wobei das Automatikbremsventil (33, 37, 71, 75) in eine Aus-Konfiguration konfigurierbar ist, um Fluid von dem Steuerventil (34, 38, 74, 78) zu einem Fluidablass (28) zu übertragen oder keine Fluid dort hindurch zu übertragen.

12. Bremssystem (11) nach einem der vorstehenden Ansprüche, wobei der mindestens eine Kanal (31, 35, 71, 75) einen ersten und einen zweiten Kanal (31, 35) umfasst.
wobei der erste Kanal (31) umfasst:
ein erstes Bedienerbremsventil (32), das durch die Bedienereingabevorrichtung (25) steuerbar ist;
ein erstes Automatikbremsventil (33), das durch das Steuersystem (20) steuerbar ist; und
ein erstes Steuerventil (35), das mit mindestens einer ersten Bremse (15) der Vielzahl von Bremsen (15, 16, 17, 18) und den ersten Bediener- und Automatikbremsventilen (32, 33) fluidisch verbunden ist, wobei das erste Steuerventil (35) durch das Steuersystem (20) zwischen der Bedienerbremskonfiguration zum fluidischen Verbinden des ersten Bedienerbremsventils (32) mit der mindestens einen ersten Bremse (15) und der Automatikbremskonfiguration zum fluidischen Verbinden des ersten Automatikbremsventils (33) mit der mindestens einen ersten Bremse (15) konfigurierbar ist,
wobei der zweite Kanal (35) umfasst:
ein zweites Bedienerbremsventil (36), das durch die Bedienereingabevorrichtung (25) steuerbar ist;
ein zweites Automatikbremsventil (37), das durch das Steuersystem (20) steuerbar ist; und
ein zweites Steuerventil (38), das mit mindestens einer zweiten Bremse (16) der Vielzahl von Bremsen (15, 16, 17, 18) und den zweiten Bediener- und Automatikbremsventilen (36, 37) fluidisch verbunden ist, wobei das zweite Steuerventil (38) durch das Steuersystem (20) zwischen der Bedienerbremskonfiguration zum fluidischen Verbinden des zweiten Bedienerbremsventils (36) mit der mindestens einen zweiten Bremse (16) und der Automatikbremskonfiguration zum fluidischen Verbinden des zweiten Automatikbremsventils (37) mit der mindestens einen zweiten Bremse (16) konfigurierbar ist,
wobei die Bremsventilanordnung (30) konfigurierbar ist in:
einen Bedienerbremsmodus, in dem das erste und/oder zweite Steuerventil (34, 38) in der Bedienerbremskonfiguration ist, und die mindestens eine erste und/oder zweite Bremse (15, 16) durch das erste und/oder zweite Bedienerbremsventil (32, 36) als Reaktion auf eine Eingabe an die Bedienereingabevorrichtung (25) steuerbar ist; und
einen Automatikbremsmodus, in dem das erste und/oder zweite Steuerventil (34, 38) in der Automatikbremskonfiguration ist, und die mindestens eine erste und/oder zweite Bremse (15, 16) durch das erste und/oder zweite Automatikbremsventil (33, 37) als Reaktion auf ein Steuersignal von dem Steuersystem (20) steuerbar ist.

13. Maschine umfassend das Bremssystem (11) nach einem der vorstehenden Ansprüche.

14. Verfahren zum Betreiben eines Bremssystems (11), wobei das Bremssystem (11) umfasst:
ein Steuersystem (20), eine Bedienereingabevorrichtung (25) und eine Vielzahl von Bremsen (15, 16, 17, 18); und
eine Bremsventilanordnung (30), umfassend mindestens einen Kanal (31, 35, 71, 75), umfassend ein Bedienerbremsventil (32, 36, 72, 76), ein Automatikbremsventil (33, 37, 71, 75) und ein Steuerventil (34, 38, 74, 78), die mit mindestens einer Bremse der Vielzahl von Bremsen (15, 16, 17, 18) und den Bediener- und Automatikbremsventilen (32, 36, 72, 76, 33, 37, 71, 75) fluidisch verbunden sind,
das Verfahren umfassend:
Bestimmen durch das Steuersystem (20), ob ein Bedienerbremsmodus oder ein Automatikbremsmodus anzuwenden ist; und
Anwenden des Bedienerbremsmodus durch:
Beibehalten des Steuerventils (34, 38, 74, 78) in einer Bedienerbremskonfiguration, um das Bedienerbremsventil (32, 36, 72, 76) mit der mindestens einen Bremse (15, 16, 17, 18) fluidisch zu verbinden; und
Empfangen einer Eingabe in die Bedienereingabevorrichtung (25), um das Bedienerbremsventil (32, 36, 72, 76) zu steuern und dadurch die mindestens eine Bremse (15, 16, 17, 18) zu steuern; oder
Anwenden des Automatikbremsmodus durch:
Beibehalten des Steuerventils (34, 38, 74, 78) in einer Automatikbremskonfiguration, um das Automatikbremsventil (33, 37, 71, 75) mit der mindestens einen Bremse (15, 16, 17, 18) fluidisch zu verbinden; und
Automatisches Steuern des Automatikbremsventils (33, 37, 71, 75) durch das Steuersystem (20) und dadurch Steuern der mindestens einen Bremse (15, 16, 17, 18).

15. Verfahren nach Anspruch 14, wobei das Verfahren das Anwenden des Automatikbremsmodus während des Bedienerbremsmodus und während die Eingabe in die Bedienereingabevorrichtung (25) empfangen wird, umfasst.

## Revendications

1. Système de freins (11) comprenant :
un système de commande (20), un dispositif d'entrée d'opérateur (25) et une pluralité de freins (15, 16, 17, 18) ; et
un ensemble de clapets de frein (30) comprenant au moins un canal (31, 35, 71, 75) comprenant :
un clapet de frein d'opérateur (32, 36, 72, 76) pouvant être commandé par le dispositif d'entrée d'opérateur ; et
un clapet de frein automatique (33, 37, 71, 75) pouvant être commandé par le système de commande (20) ;
**caractérisé par** un clapet de commande (34, 38, 74, 78) raccordé fluidiquement à au moins un frein de la pluralité de freins (15, 16, 17, 18) et les clapets de frein d'opérateur et automatique (32, 36, 72, 76, 33, 37, 71, 75), dans lequel le clapet de commande (34, 38, 74, 78) peut être configuré par le système de commande (20) entre une configuration de frein d'opérateur pour raccorder fluidiquement le clapet de frein d'opérateur (32, 36, 72, 76) à l'au moins un frein (15, 16, 17, 18) et une configuration de frein automatique pour raccorder fluidiquement le clapet de frein automatique (33, 37, 71, 75) à l'au moins un frein (15, 16, 17, 18) ;
dans lequel l'ensemble de clapets de frein (30) peut être configuré dans :
un mode de freinage d'opérateur dans lequel le clapet de commande (34, 38, 74, 78) est dans la configuration de frein d'opérateur et l'au moins un frein (15, 16, 17, 18) peut être commandé par le clapet de frein d'opérateur (32, 36, 72, 76) en réponse à une entrée dans le dispositif d'entrée d'opérateur (25) ; et
un mode de freinage automatique dans lequel le clapet de commande (34, 38, 74, 78) est dans la configuration de frein automatique et l'au moins un frein (15, 16, 17, 18) peut être commandé par le clapet de frein automatique (33, 37, 71, 75) en réponse à un signal de commande provenant du système de commande (20).

2. Système de freins (11) selon la revendication 1 dans lequel le système de commande (20) est configuré pour mettre en oeuvre le mode de freinage automatique et commander le clapet de frein automatique (33, 37, 71, 75) conformément à au moins une routine de freinage avancé.

3. Système de freins (11) selon la revendication 1 ou la revendication 2 dans lequel l'ensemble de clapets de frein (30) comprend une pluralité de canaux (31, 35, 71, 75) et le système de commande (20) est configuré pour commander la pluralité de canaux (31, 35, 71, 75), en particulier les clapets de commande (34, 38, 74, 78) et/ou les clapets de frein automatique (33, 37, 71, 75) de ceux-ci, indépendamment les uns des autres.

4. Système de freins (11) selon les revendications 2 et 3 dans lequel le système de commande (20) est configuré pour, indépendamment pour chaque canal (31, 35, 71, 75), mettre en oeuvre le mode de freinage automatique et commander le clapet de frein automatique (33, 37, 71, 75) conformément à au moins une routine de freinage avancé.

5. Système de freins (11) selon l'une quelconque des revendications 2 à 4 dans lequel l'au moins une routine de freinage avancé comprend au moins l'un parmi ralentissement automatique, application de frein électronique, freinage antidérapage et contrôle dynamique de la stabilité.

6. Système de freins (11) selon l'une quelconque des revendications précédentes dans lequel le clapet de commande (34, 38, 74, 78) est sollicité vers la configuration de frein d'opérateur et/ou le système de commande (20) est configuré pour mettre en oeuvre le mode de freinage automatique en actionnant le clapet de commande (34, 38, 74, 78) dans la configuration de frein automatique.

7. Système de freins (11) selon l'une quelconque des revendications précédentes dans lequel l'ensemble de clapets de frein (30) comprend une pluralité de canaux (31, 35, 71, 75) et les clapets de frein d'opérateur (32, 36, 72, 76) de la pluralité de canaux (31, 35, 71, 75) peuvent être commandés simultanément par le dispositif d'entrée d'opérateur (25).

8. Système de freins (11) selon l'une quelconque des revendications précédentes dans lequel le clapet de frein d'opérateur (32, 36, 72, 76) est raccordé fluidiquement à au moins une source de fluide (26, 27) et peut être configuré dans une première position de clapet de frein d'opérateur pour communiquer un fluide sous pression depuis l'au moins une source de fluide (26, 27) vers le clapet de commande (34, 38, 74, 78).

9. Système de freins (11) selon la revendication 8 dans lequel le clapet de frein d'opérateur (32, 36, 72, 76) peut être configuré dans une deuxième et/ou une troisième position de clapet de frein d'opérateur, dans lequel dans la deuxième position de clapet de frein d'opérateur le clapet de frein d'opérateur (32, 36, 72, 76) est configuré pour ne pas communiquer de fluide à travers celui-ci et/ou dans la troisième position de clapet de frein d'opérateur le clapet de frein d'opérateur (32, 36, 72, 76) est configuré pour communiquer un fluide depuis le clapet de commande (34, 38, 74, 78) vers un drain de fluide (28).

10. Système de freins (11) selon l'une quelconque des revendications précédentes dans lequel le clapet de frein automatique (33, 37, 71, 75) est raccordé fluidiquement à au moins une source de fluide (26, 27) et peut être configuré dans une configuration de commande variable pour communiquer un fluide sous pression depuis l'au moins une source de fluide (26, 27) vers le clapet de commande (34, 38, 74, 78).

11. Système de freins (11) selon la revendication 10 dans lequel le clapet de frein automatique (33, 37, 71, 75) peut être configuré dans une configuration d'arrêt pour communiquer un fluide depuis le clapet de commande (34, 38, 74, 78) vers un drain de fluide (28) ou pour ne pas communiquer de fluide à travers celui-ci.

12. Système de freins (11) selon l'une quelconque des revendications précédentes dans lequel l'au moins un canal (31, 35, 71, 75) comprend des premier et second canaux (31, 35),
dans lequel le premier canal (31) comprend :
un premier clapet de frein d'opérateur (32) pouvant être commandé par le dispositif d'entrée d'opérateur (25) ;
un premier clapet de frein automatique (33) pouvant être commandé par le système de commande (20) ; et
un premier clapet de commande (35) raccordé fluidiquement à au moins un premier frein (15) de la pluralité de freins (15, 16, 17, 18) et aux premiers clapets de frein d'opérateur et automatique (32, 33), dans lequel le premier clapet de commande (35) peut être configuré par le système de commande (20) entre la configuration de frein d'opérateur pour raccorder fluidiquement le premier clapet de frein d'opérateur (32) à l'au moins un premier frein (15) et la configuration de frein automatique pour raccorder fluidiquement le premier clapet de frein automatique (33) à l'au moins un premier frein (15),
dans lequel le second canal (35) comprend :
un second clapet de frein d'opérateur (36) pouvant être commandé par le dispositif d'entrée d'opérateur (25) ;
un second clapet de frein automatique (37) pouvant être commandé par le système de commande (20) ; et
un second clapet de commande (38) raccordé fluidiquement à au moins un second frein (16) de la pluralité de freins (15, 16, 17, 18) et aux seconds clapets de frein d'opérateur et automatique (36, 37), dans lequel le second clapet de commande (38) peut être configuré par le système de commande (20) entre la configuration de frein d'opérateur pour raccorder fluidiquement le second clapet de frein opérateur (36) à l'au moins un second frein (16) et la configuration de frein automatique pour raccorder fluidiquement le second clapet de frein automatique (37) à l'au moins un second frein (16),
dans lequel l'ensemble de clapets de frein (30) peut être configuré dans :
un mode de freinage d'opérateur dans lequel les premier et/ou second clapets de commande (34, 38) sont dans la configuration de frein d'opérateur et l'au moins un premier et/ou un second frein (15, 16) peut être commandé par les premier et/ou second clapets de frein d'opérateur (32, 36) en réponse à une entrée dans le dispositif d'entrée d'opérateur (25) ; et
un mode de freinage automatique dans lequel les premier et/ou seconds clapets de commande (34, 38) sont dans la configuration de frein automatique et l'au moins un premier et/ou un second frein (15, 16) peut être commandé par les premier et/ou second clapets de frein automatique (33, 37) en réponse à un signal de commande provenant du système de commande (20).

13. Machine comprenant le système de freins (11) selon l'une quelconque des revendications précédentes.

14. Procédé de fonctionnement d'un système de freins (11), le système de freins (11) comprenant :
un système de commande (20), un dispositif d'entrée d'opérateur (25) et une pluralité de freins (15, 16, 17, 18) ; et
un ensemble de clapets de frein (30) comprenant au moins un canal (31, 35, 71, 75) comprenant un clapet de frein d'opérateur (32, 36, 72, 76), un clapet de frein automatique (33, 37, 71, 75) et un clapet de commande (34, 38, 74, 78) raccordé fluidiquement à au moins un frein de la pluralité de freins (15, 16, 17, 18) et aux clapets de frein d'opérateur et automatique (32, 36, 72, 76, 33, 37, 71, 75),
le procédé comprenant :
la détermination, par le système de commande (20), établissant s'il faut mettre en oeuvre un mode de freinage d'opérateur ou un mode de freinage automatique ; et
la mise en oeuvre du mode de freinage d'opérateur en :
maintenant le clapet de commande (34, 38, 74, 78) dans une configuration de frein d'opérateur pour raccorder fluidiquement le clapet de frein d'opérateur (32, 36, 72, 76) à l'au moins un frein (15, 16, 17, 18) ; et
recevant une entrée au niveau du dispositif d'entrée d'opérateur (25) pour commander le clapet de frein d'opérateur (32, 36, 72, 76) et de ce fait commander l'au moins un frein (15, 16, 17, 18) ; ou
la mise en oeuvre du mode de freinage automatique en :
maintenant le clapet de commande (34, 38, 74, 78) dans une configuration de frein automatique pour raccorder fluidiquement le clapet de frein automatique (33, 37, 71, 75) à l'au moins un frein (15, 16, 17, 18) ; et
commandant automatiquement, par le système de commande (20), le clapet de frein automatique (33, 37, 71, 75) et de ce fait commander l'au moins un frein (15, 16, 17, 18).

15. Procédé selon la revendication 14 dans lequel le procédé comprend la mise en oeuvre du mode de freinage automatique pendant le mode de freinage d'opérateur et pendant que l'entrée est reçue au niveau du dispositif d'entrée d'opérateur (25).
